# EUROPEAN PATENT SPECIFICATION

(11) **EP 4 364 389 B1**
(45) Date of publication and mention of the grant of the patent: **04.06.2025**
(21) Application number: 22750887.6
(22) Date of filing: 08.06.2022
(51) Int. Cl.: H04L 67/1004, H04L 67/101

(54) **METHOD OF USING ONLY TXT DOMAIN NAME SYSTEM RESOURCE RECORDS TO TRANSFER ALL DATA USED BY CLIENT-SIDE GLOBAL SERVER LOAD BALANCERS AND ITS IMPLEMENTATION**
VERFAHREN ZUR VERWENDUNG VON NUR TXT-DOMAINNAMENSYSTEM-RESSOURCENAUFZEICHNUNGEN ZUR ÜBERTRAGUNG ALLER DATEN, DIE VON CLIENT-SEITIGEN GLOBAL SERVER LOAD BALANCERS VERWENDET WERDEN, UND SEINE IMPLEMENTIERUNG
PROCÉDÉ D'UTILISATION UNIQUEMENT DES ENREGISTREMENTS DE RESSOURCES DU SYSTÈME DE NOM DE DOMAINE TXT POUR TRANSFÉRER TOUTES LES DONNÉES UTILISÉES PAR LES ÉQUILIBREURS DE CHARGE DE SERVEUR GLOBAL CÔTÉ CLIENT ET SA MISE EN OEUVRE

(30) Priority: 29.06.2021 HR 20211025
(43) Date of publication of application: 08.05.2024
(73) Proprietor: DynConD Ltd., 31000 Osjecko-baranjska county Osijek (HR)
(72) Inventor: TOMIC, Drazen, 31000 Osijek (HR)
(86) International application number: PCT/HR2022/000003
(87) International publication number: WO 2023/275576

(56) References cited:
- KR-A- 20100 020 909
- US-A1- 2010 121 932
- US-A1- 2012 117 621
- SHAIKH A ET AL: "On the effectiveness of DNS-based server selection", PROCEEDINGS IEEE INFOCOM 2001. CONFERENCE ON COMPUTER COMMUNICATIONS. TWENTIETH ANNUAL JOINT CONFERENCE OF THE IEEE COMPUTER AND COMMUNICATIONS SOCIETY (CAT. NO.01CH37213); [PROCEEDINGS IEEE INFOCOM. THE CONFERENCE ON COMPUTER COMMUNICATIONS], PISCAT, vol. 3, 22 April 2001 (2001-04-22), pages 1801 - 1810, XP010538874, ISBN: 978-0-7803-7016-6, DOI: 10.1109/INFCOM.2001.916678

## Description

### TECHNICAL FIELD OF THE INVENTION

This patent relates to a method of transferring all data used by a client-side global server load balancer using only TXT DNS resource records, which the global server load balancer server sends to the global server load balancer client via a computer system.

### BACKGROUND OF THE INVENTION

Client-side Global Server Load Balancers (GSLB) [1, 2, 3, 4] are used by replicated and distributed network services for global server load balancing, instant server failover and a better user experience. By using a client-side GSLB, the client selects the optimal server independently, usually based on a measured network distance between client and servers (in contrast to commonly used imprecise geographic proximity used by server-side GSLB or server-side measurements [5]), current server load and/or server service response time.

To determine the optimal server for each client, the client-side GSLB method needs:
- information of available server IP addresses (Internet Protocol version 4 - IPv4 and/or Internet Protocol version 6 - IPv6) for a requested fully qualified domain name (FQDN),
- information and parameters on how to measure network distance from the client to servers, where network distance is measured and expressed as round-trip time (RTT) value in [msec],
- information about current server load expressed in [%] and/or service response time expressed in [msec], and
- parameters for calculating value used by the dynamic server selection process on the client-side to determine the optimal server, usually expressed as a composite DNS-metric

Domain Name System (DNS) generally uses resource records (RRs) to store and distribute predefined data types with predefined structures (for example A RR for 32-bit lPv4 IP address). Since introducing new types of RRs usually requires changes in basic DNS infrastructure, TXT RR is commonly used for transferring data not specified by other RRs [6, 7].

The main problem with using TXT for client-side GSLB purposes is that It requires data from both A/AAAA RRs and specific data stored in TXT RR, as required by the dynamic server selection process. Despite the fact that most authoritative DNS servers (ADNS) support an additional section in the DNS response, the placement of a TXT RR in an additional section of A/AAAA RR is ignored by most recursive DNS servers and therefore two DNS queries must be done to collect all the needed data: one for the A/AAAA RR and one for its related TXT RR.

This patent solves the problem of data transfer for client-side GSLB purposes, usually performed in two different queries per-server IP address, by introducing the usage of only one GSLB specific-purpose TXT RR to transfer both IP and client-side GSLB specific data. In doing so, the TXT RR is not used as a text string, as defined in [1], but contains binary data in the same way as an A RR contains a 32-bit IP address. The use of TXT in binary form also significantly reduces the size of TXT RR, so for example, to transfer the IPv4 network address with all four octets greater than or equal to the decimal value of 100, 15 string characters are required, but only four string characters are required when the textual resource record is used in binary form. This GSLB specific-purpose TXT RR for client-side GSLB also enables the transfer of single IPv4 or IPv6 or both IPv4/ IPv6 IP addresses in one TXT RR so no additional query is required to access A and/or AAAA RRs.

### PATENT CITATIONS

US 2010/121932 A1: A global server load-balancing (GSLB) switch serving as a proxy to an authoritative DNS.
[1] US6078960A: Client-side load-balancing in client server network
[2] US20010025313A1: Method of balancing load among mirror servers
[3] US20030229697A1: Method and apparatus for global server load balancing
[4] US20090222583A1: Client-side load balancing
[5] US6446121B1: System and method for measuring round trip times in a network using a TCP packet
[6] RFC 1035: Domain Names - Implementation and Specification, httos://www.ietf.org/rfc/rfc1035.txt
[7] RFC 1464: Using the Domain Name System To Store Arbitrary String Attributes, https://www.ietf.org/rfc/rfc1464.txt

### DETAILED DESCRIPTION OF THE INVENTION

Client-side GSLB DNS resolving procedure using standard DNS query/response:
1) The DNS resolver (101) sends a standard DNS query requesting TXT RR data for a specified FQDN (for example: www.example.com) to an authoritative DNS server (102) or a recursive DNS server (103)
2) If a query is sent to a non-authoritative DNS server (103), which is a recursive DNS server, standard DNS resolving procedure for recursive DNS servers applies by using standard global DNS Infrastructure (104) and DNS queries/responses (107, 108, 109). The GSLB specific-purpose TXT RR received is treated by the recursive DNS server as any other standard string characters TXT RR
3) If a query is sent to an authoritative DNS server (102) the GSLB specific-purpose TXT RR is created by using a GSLB specific-purpose TXT RR RDATA format:
a) In bytes 1-3 up to three characters are set for naming (labeling) GSLB specific-purpose TXT RR RDATA, for example: DYN
b) If the server for the requested FQDN has an IPv4 IP address, the first bit in byte 4 (the most significant bit) is set to value 1 (Flag field)
c) If the server for the requested FQDN has an IPv6 IP address, the second bit in byte 4 is set to value 1 (Flag field)
d) Based on b) and c) all other fields are set by using the binary representation of numeric data. If an IPv4 or IPv6 IP address is not present in the DNS response, these fields are omitted.
- Structure of TXT RR RDATA field with both IPv4 and IPv6 IP addresses included and display of the TXT RR in binary form created by the authoritative DNS server:

| Byte | Content and purpose of the byte |
|---|---|
| 1 | Resource record naming, byte 1 |
| 2 | Resource record naming, byte 2 |
| 3 | Resource record naming, byte 3 |
| 4 | Flag, byte 1 |
| 5 | Flag, byte 2 |
| 6 | IPv4 network address, byte 1 |
| 7 | IPv4 network address, byte 2 |
| 8 | IPv4 network address, byte 3 |
| 9 | IPv4 network address, byte 4 |
| 10 | IPv6 network address, byte 1 |
| 11 | IPv6 network address, byte 2 |
| 12 | IPv6 network address, byte 3 |
| 13 | IPv6 network address, byte 4 |
| 14 | IPv6 network address, byte 5 |
| 15 | IPv6 network address, byte 6 |
| 16 | IPv6 network address, byte 7 |
| 17 | IPv6 network address, byte 8 |
| 18 | IPv6 network address, byte 9 |
| 19 | IPv6 network address, byte 10 |
| 20 | IPv6 network address, byte 11 |
| 21 | IPv6 network address, byte 12 |
| 22 | IPv6 network address, byte 13 |
| 23 | IPv6 network address, byte 14 |
| 24 | IPv6 network address, byte 15 |
| 25 | IPv6 network address, byte 16 |
| 26 | Impact of Server Response Time |
| 27 | Service Response Time, byte 1 |
| 28 | Service Response Time, byte 2 |
| 29 | Impact of Service Response Time |
| 30 | Server Load, byte 1 |
| 31 | Server Load, byte 2 |
| 32 | Impact of Server Load |
| 33 | Number of requests for network distance measurement |
| 34 | Network distance measurement interval, byte 1 |
| 35 | Network distance measurement interval, byte 2 |
| 36 | Protocol, byte 1 |
| 37 | Protocol, byte 2 |
| 38 | Port, byte 1 |
| 39 | Port, byte 2 |
| 40 | Timeout, byte 1 |
| 41 | Timeout, byte 2 |

- Structure of TXT RR RDATA field with only IPv4 IP addresses included and display of the TXT RR in binary form created by the authoritative DNS server:

| Byte | Content and purpose of the byte |
|---|---|
| 1 | Resource record naming, byte 1 |
| 2 | Resource record naming, byte 2 |
| 3 | Resource record naming, byte 3 |
| 4 | Flag, byte 1 |
| 5 | Flag, byte 2 |
| 6 | IPv4 network address, byte 1 |
| 7 | IPv4 network address, byte 2 |
| 8 | IPv4 network address, byte 3 |
| 9 | IPv4 network address, byte 4 |
| 10 | Impact of Server Response Time |
| 11 | Service Response Time, byte 1 |
| 12 | Service Response Time, byte 2 |
| 13 | Impact of Service Response Time |
| 14 | Server Load, byte 1 |
| 15 | Server Load, byte 2 |
| 16 | Impact of Server Load |
| 17 | Number of requests for network distance measurement |
| 18 | Network distance measurement interval, byte 1 |
| 19 | Network distance measurement interval, byte 2 |
| 20 | Protocol, byte 1 |
| 21 | Protocol, byte 2 |
| 22 | Port, byte 1 |
| 23 | Port, byte 2 |
| 24 | Timeout, byte 1 |
| 25 | Timeout, byte 2 |

e) For FQDNs with multiple servers procedures a)-d) are repeated
f) All TXT RRs created In steps a)-e) are sent to the DNS resolver (101) or to the recursive DNS server (103) as a standard DNS response
4) After receiving a DNS response, the DNS resolver (101) processes every TXT RR RDATA as follows:
a) Check value in first 3 bytes (text label/name) to confirm receiving the GSLB specific-purpose TXT RR. If that text label is not as expected, then that TXT RR is rejected
b) Check Flag fields (bytes 4-5) to find out the structure of the rest of TXT RR RDATA (if IPv4 and/or IPv6 IP addresses are included In the DNS response)
c) Process data according to the GSLB specific-purpose TXT RR RDATA format by using IP and specific data stored in TXT RR RDATA for calculating the value used by the dynamic server selection process on the client-side to determine the optimal server. The DNS resolver (101) determines and calculates the position of each field of the received GSLB specific-purpose TXT RR after byte 5 by examining the structure of the GSLB specific-purpose TXT RR RDATA format and values of flags in bytes 4 and 5, which always have a fixed position
d) According to the information provided in the previous step (c) the DNS resolver (101) can measure the network distance between itself and servers and calculate the composite DNS-metric by using measured information and information about current server load and/or server service response time

The GSLB specific-purpose TXT RR RDATA format for a client-side global server load balancer

| Byte | Size: | TXT RR RDATA field structure description: |
|---|---|---|
| 1-3 | 3 bytes | Fixed text label for the labeling/naming of TXT RR RDATA |
| 4-5 | 2 bytes | Flags - if first, the most significant bit, is set to 1: IPv4 is present in TXT RR, if second bit is set to 1: IPv6 is present in TXT RR, other bits: reserved for future use, default values are 0 |
| 6-9 | 4 bytes | Optional iPv4 field - server IPv4 IP address. IPv4 or/and IPv6 must be defined |
| 10-25 | 16 bytes | Optional IPv6 field - server IPv6 IP address. IPv4 or/and IPv6 must be defined |
| 26 | 1 byte | Impact of Server Response Time - impact of the network distance between the client and the server in [%] to the composite DNS-metric calculation. Acceptable values are between 0 and 255. Network distance is measured by the DNS resolver (101) |
| 27-28 | 2 bytes | Service Response Time - network service response time in [msec] provided by the GSLB server |
| 29 | 1 byte | Impact of Service Response Time - impact of the Service Response Time in [%] to the composite DNS metric calculation. Acceptable values are between 0 and 255 |
| 30-31 | 2 bytes | Server Load - current server load, can be a load parameter in [%], acceptable values are between 0 and 100, or a load parameter converted to the server response time in [msec] provided by the GSLB server |
| 32 | 1 byte | Impact of Server Load - impact of the Server Load to the composite DNS-metric calculation in [%]. Acceptable values are between 0 and 255 |
| 33 | 1 byte | Request - number of requests for network distance - server response time - measurement between DNS resolver (101) and network service's server |
| 34-35 | 2 bytes | Interval Parameter - number of [msec] between requests |
| 36-37 | 2 bytes | Protocol-standard protocol used for the network distance measurement |
| 38-39 | 2 bytes | Port - standard TCP port used for network distance measurement |
| 40-41 | 2 bytes | Timeout - Time in [msec] from sending packets to declaring the server unavailable |

| | | |
|---|---|---|
| Total: max 41 bytes per TXT RR RDATA if both IPv4 and IPv6 are used, min 25 bytes if only IPv4 is used, or 37 bytes if only IPv6 is used. | | |

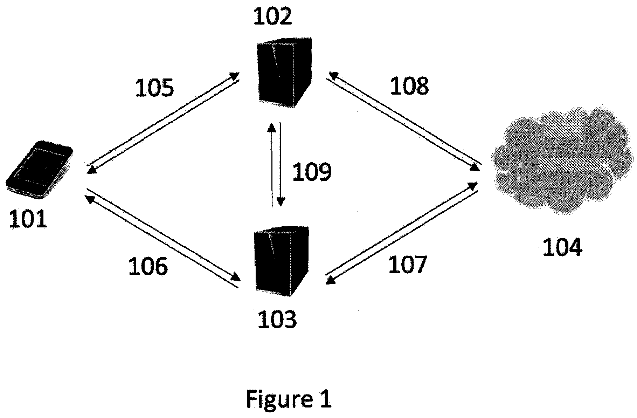

### BRIEF DESCRIPTION OF FIGURE 1

Figure 1 describes the method and the structure of the apparatus to transfer all data used by Client-side Global Server Load Balancers by using only GSLB specific-purpose TXT RR, wherein
- (101) is the client-side GSLB DNS client (resolver), implemented as a library function on a desktop computer, laptop, server, smartphone, tablet, gaming console, Internet of Things and any other client devices with various operating systems (OS), capable of reading the structure of GSLB specific-purpose TXT RR RDATA format
- (102) is the authoritative DNS server answering to the DNS query of the DNS resolver (101), the recursive DNS server (103) and the standard global DNS infrastructure (104)
- (103) is the recursive DNS server answering the DNS resolver's (101) DNS query
- (104) is a standard global DNS infrastructure consisting of root DNS servers, top-level domain (TLD) DNS servers and other second-level and subdomains DNS servers answering to the recursive DNS server's (103) DNS queries
- (105) is a standard DNS query/response sent from the DNS resolver (101) to the authoritative DNS server (102) and vice versa
- (106) is a standard DNS query/response sent from the DNS resolver (101) to the recursive DNS server (103) and vice versa
- (107) is a standard DNS query/response sent from the recursive DNS server (103) to the standard global DNS infrastructure (104) and vice versa
- (108) is a standard DNS query/response sent from the standard global DNS infrastructure (104) to the authoritative DNS server (102) and vice versa
- (109) is a standard DNS query/response sent from the recursive DNS server (103) to the authoritative DNS server (102) and vice versa

## Claims

1. A method of transferring all data used by the client-side global server load balancer by using only global server load balancer specific-purpose TXT resource records, implemented via a computer system, for the purpose of managing server load and network traffic, said method comprising the steps of:
I. the domain name system client (101) sends a standard domain name system query requesting TXT resource record data for a specific fully qualified domain name to an authoritative domain name server (102) or a non-authoritative domain name server (103);
II. if the query is sent to a non-authoritative domain name server (103), that is a recursive domain name server, the standard domain name resolution procedure for a recursive domain name server using the standard global domain name system infrastructure (104) and standard domain name system query/response (107, 108, 109) is used, wherein the received TXT resource record for specific use by the global server load balancer is treated in the recursive domain name system server (103) as any other standard TXT resource record with string characters;
III. if the query is sent to an authoritative domain name system server (102), a TXT resource record for specific use in the global server load balancer is created using the TXT resource record format for specific use in the global server load balancer as follows:
a) in bytes 1-3 up to three characters are set to name the TXT resource record for specific use in the global server load balancer;
b) if the server for the requested fully qualified domain name has a network address of the Internet Protocol version 4, the first bit in byte 4, which represents the most significant bit in the byte, is set to the value 1;
c) if the server for the requested fully qualified domain name has an Internet Protocol version 6 network address, the second bit in byte 4 is set to 1;
d) based on the activities performed in steps b) and c) all other fields are set using binary numerical data, where if the network address of the Internet Protocol version 4 or Internet Protocol version 6 is not present in the domain name system response, these fields are omitted;
e) for fully qualified domain names with multiple servers, procedures a) to d) are repeated;
f) all TXT resource records created in steps a) to e) are sent to the domain name system client (101) or the recursive domain name system server (103) as a standard domain name system response;
IV. after receiving a response from the domain name system, the domain name system client (101) processes each RDATA field of the TXT resource record as follows:
a) the value in the first 3 bytes, which represents the naming of the TXT resource record, is checked to acknowledge receipt of the TXT resource record for specific use by the global server load balancer, and if that text label is not as expected, it gets rejected;
b) the flag fields are checked, defined by bytes 4 and 5, to find out the structure of the rest of the RDATA data of the TXT resource record to determine whether the network addresses Internet Protocol version 4 and/or Internet protocol version 6 are included in the domain name system response;
c) data is processed following the RDATA field format of the TXT resource record by using Internet Protocol network address data and specific data stored in the RDATA of the TXT resource record fields to calculate the value used in the client-side dynamic server selection process to determine the optimal server wherein the domain name system client (101) determines and calculates the position of each TXT resource record field for specific use in the global server load balancer received after byte 5 by examining the RDATA structure format of the TXT resource record field and the flag value in bytes 4 and 5, which always have an unchanging position;
d) according to the information obtained in the previous step c) the domain name system client (101) can measure the network distance between itself and the server and calculate the composite domain name system metric using measured information and information about current server load and/or network service response time.

2. The method of claim 1, wherein related data from A, AAAA and TXT resource records are combined, containing the IP address(es) and client-side global server load balancer specific data, into one TXT resource record for each server.

3. The method of claim 1, wherein TXT resource records RDATA are used in binary form, as opposed to classic string characters form of TXT resource records, to reduce TXT resource record size.

4. The method of claim 1, wherein variable size of TXT resource record RDATA is enabled by introducing one-bit flags for each optional TXT resource record RDATA data field, which defines whether the TXT resource record contains that optional field or not.

5. The method of claim 1, wherein only one domain name system query/response is performed for IP address(es) domain name system resolving and additional client-side global server load balancer specific data transfer by using only one global server load balancer specific-purpose TXT resource record, instead of using individual A/AAAA and related TXT resource records domain name system queries/responses to transfer that data or using an additional section of the domain name system message.

6. The method of claim 1, wherein the data transfer is performed by using the RDATA field of the TXT resource record for specific use in a global server load balancer, with variable TXT resource record size of minimum of 25 bytes and maximum 41 bytes and internal RDATA field structure as follows:
- Naming of resource record, size 3 bytes;
- Flags, size 2 bytes;
- Network address of Internet Protocol version 4, size 4 bytes - optional field;
- Network address of Internet Protocol version 6, size 16 bytes - optional field;
- Impact of Server Response Time, size 1 byte;
- Service Response Time, size 2 bytes;
- Impact of Service Response Time, size 1 byte;
- Server Load, size 2 bytes;
- Impact of Server Load, size 1 byte;
- Number of requests for network distance measurement, size 1 byte;
- Network distance measurement interval, size 2 bytes;
- Protocol, size 2 bytes;
- Port, size 2 bytes;
- Timeout, size 2 bytes;
which is used to transfer one or more network addresses and associated client-specific data from the global server load balancer system for the required fully qualified domain name in the form of a single TXT resource record for each server.

7. The method of claim 6, wherein a domain name system client (101) capable of reading the presented structure of the global server load balancer specific-purpose TXT resource record RDATA is used.

8. Computer readable storage medium comprising instructions which, when executed by a client device cause the client device to carry out the method according to claims 1-7, wherein the method is used to transfer all data used by the client-side global server load balancer using only one domain name system TXT resource record for each server, where the network address can only be the network address of Internet Protocol version 4, only the network address of the Internet Protocol version 6 or both network addresses of a particular server, to calculate the composite metrics of the domain name system on the client side.

## Patentansprüche

1. Verfahren zur Übertragung sämtlicher von einem clientseitigen Global Server Load Balancer verwendeten Daten durch ausschließliche Verwendung von TXT-Ressourceneintragungen mit spezieller Zweckbestimmung für Global Server Load Balancer, umgesetzt mittels eines Computersystems, zum Zweck der Verwaltung von Serverlast und Netzwerkverkehr, wobei das Verfahren folgende Schritte umfasst:
I. Der Domain-Name-System-Client (101) sendet eine Standard-DNS-Anfrage zur Abfrage von TXT-Ressourceneintragsdaten für einen bestimmten vollqualifizierten Domainnamen an einen autoritativen DNS-Server (102) oder einen nicht-autoritativen DNS-Server (103);
II. Wird die Anfrage an einen nicht-autoritativen DNS-Server (103), also einen rekursiven DNS-Server, gesendet, wird das Standardverfahren zur Namensauflösung mit der globalen DNS-Infrastruktur (104) und standardisierten DNS-Anfragen/-Antworten (107, 108, 109) verwendet, wobei der empfangene TXT-Ressourceneintrag zur spezifischen Nutzung durch den Global Server Load Balancer im rekursiven DNS-Server (103) wie ein üblicher TXT-Ressourceneintrag mit Zeichenketten behandelt wird;
III. Wird die Anfrage an einen autoritativen DNS-Server (102) gesendet, wird ein TXT-Ressourceneintrag zur spezifischen Nutzung im Global Server Load Balancer unter Verwendung des folgenden Formats erstellt:
a. In Byte 1 bis 3 werden bis zu drei Zeichen gesetzt, um den TXT-Ressourceneintrag für die spezifische Nutzung im Global Server Load Balancer zu benennen;
b. Verfügt der Server des angeforderten vollqualifizierten Domainnamens über eine Netzwerkadresse nach Internetprotokoll Version 4, wird das erste Bit in Byte 4, welches das höchstwertige Bit darstellt, auf 1 gesetzt;
c. Verfügt der Server über eine Netzwerkadresse nach Internetprotokoll Version 6, wird das zweite Bit in Byte 4 auf 1 gesetzt;
d. Basierend auf den in b) und c) ausgeführten Schritten werden alle weiteren Felder mit binären numerischen Daten gesetzt. Sind keine IPv4- oder IPv6-Adressen in der DNS-Antwort enthalten, entfallen diese Felder;
e. Bei vollqualifizierten Domainnamen mit mehreren Servern werden die Schritte a) bis d) wiederholt;
f. Alle in den Schritten a) bis e) erzeugten TXT-Ressourceneinträge werden als Standard-DNS-Antwort an den DNS-Client (101) oder den rekursiven DNS-Server (103) gesendet;
IV. Nach Erhalt der DNS-Antwort verarbeitet der DNS-Client (101) jedes RDATA-Feld des TXT-Ressourceneintrags wie folgt:
a) Der Wert in den ersten 3 Bytes, welcher der Benennung des TXT-Ressourceneintrags dient, wird geprüft, um den Empfang eines speziell für den Global Server Load Balancer bestimmten Eintrags zu bestätigen; ist das Textlabel nicht wie erwartet, wird der Eintrag abgelehnt;
b) Die durch Byte 4 und 5 definierten Flag-Felder werden überprüft, um die Struktur der restlichen RDATA-Daten zu ermitteln und festzustellen, ob IPv4- und/oder IPv6-Adressen enthalten sind;
c) Die Daten werden gemäß dem RDATA-Feldformat des TXT-Eintrags verarbeitet. Die IPv4-/IPv6-Netzwerkadresse und die spezifischen Daten im RDATA-Feld dienen zur Berechnung eines Werts, der im clientseitigen dynamischen Serverauswahlverfahren zur Bestimmung des optimalen Servers verwendet wird, wobei der DNS-Client (101) die Position jedes spezifischen Feldes im TXT-Eintrag nach Byte 5 bestimmt, basierend auf Strukturformat und den Flags in Byte 4 und 5, deren Position unveränderlich ist;
d) Anhand der in Schritt c) gewonnenen Informationen kann der DNS-Client (101) die Netzwerkdistanz zum Server messen und die zusammengesetzten DNS-Metriken unter Berücksichtigung der gemessenen Informationen sowie der aktuellen Serverauslastung und/oder Netzwerkdienst-Reaktionszeit berechnen.

2. Verfahren nach Anspruch 1, wobei zusammengehörige Daten aus A-, AAAA- und TXT-Ressourceneinträgen, die IP-Adressen und spezifische Daten für den clientseitigen Global Server Load Balancer enthalten, in einem TXT-Ressourceneintrag pro Server zusammengefasst werden.

3. Verfahren nach Anspruch 1, wobei RDATA-Felder von TXT-Ressourceneinträgen in binärer Form statt in klassischer Zeichenkettenform verwendet werden, um die Größe der TXT-Einträge zu reduzieren.

4. Verfahren nach Anspruch 1, wobei durch Einführung von Ein-Bit-Flags für jedes optionale RDATA-Feld die variable Größe der TXT-Ressourceneintragsdaten ermöglicht wird, um anzugeben, ob ein bestimmtes Feld enthalten ist oder nicht.

5. Verfahren nach Anspruch 1, wobei nur eine DNS-Anfrage/Antwort für die Auflösung von IP-Adressen und die Übertragung zusätzlicher spezifischer Daten des clientseitigen Global Server Load Balancer durch ausschließliche Verwendung eines einzigen speziell bestimmten TXT-Ressourceneintrags erfolgt, anstelle mehrerer separater A/AAAA- und zugehöriger TXT-Anfragen/Antworten oder der Verwendung eines zusätzlichen Abschnitts in der DNS-Nachricht.

6. Verfahren nach Anspruch 1, wobei die Übertragung über das RDATA-Feld eines speziell bestimmten TXT-Ressourceneintrags für Global Server Load Balancer erfolgt, mit einer variablen Größe von mindestens 25 Bytes und höchstens 41 Bytes und folgender interner Struktur:
- Benennung des Ressourceneintrags, 3 Bytes;
- Flags, 2 Bytes;
- IPv4-Adresse, 4 Bytes (optional);
- IPv6-Adresse, 16 Bytes (optional);
- Einfluss der Serverantwortzeit, 1 Byte;
- Serviceantwortzeit, 2 Bytes;
- Einfluss der Serviceantwortzeit, 1 Byte;
- Serverlast, 2 Bytes;
- Einfluss der Serverlast, 1 Byte;
- Anzahl der Messanfragen für Netzwerklatenz, 1 Byte;
- Messintervall für Netzwerklatenz, 2 Bytes;
- Protokoll, 2 Bytes;
- Port, 2 Bytes;
- Timeout, 2 Bytes; wobei eine oder mehrere Netzwerkadressen und zugehörige clientseitige Daten des Global Server Load Balancer-Systems in Form eines einzelnen TXT-Ressourceneintrags pro Server übertragen werden.

7. Verfahren nach Anspruch 6, wobei ein DNS-Client (101) verwendet wird, der die dargestellte Struktur des spezifisch bestimmten TXT-Ressourceneintrags des Global Server Load Balancer lesen kann.

8. Computerlesbares Speichermedium, das Anweisungen enthält, die bei Ausführung durch ein Clientgerät dieses veranlassen, das Verfahren gemäß den Ansprüchen 1 bis 7 auszuführen, wobei das Verfahren zur Übertragung aller vom clientseitigen Global Server Load Balancer verwendeten Daten unter ausschließlicher Verwendung eines TXT-Ressourceneintrags pro Server dient, wobei die Netzwerkadresse entweder nur eine IPv4-Adresse, nur eine IPv6-Adresse oder beide Adressen eines bestimmten Servers umfassen kann, um die zusammengesetzten Metriken des DNS auf Clientseite zu berechnen.

## Revendications

1. **Procédé** de transfert de l'ensemble des données utilisées par un équilibreur de charge global côté client, en utilisant uniquement des enregistrements de ressources TXT spécifiques à cet usage, procédé mis en œuvre par un système informatique aux fins de gestion de la charge des serveurs et du trafic réseau, comprenant les étapes suivantes :
I. Un client du système de noms de domaine (DNS) (101) envoie une requête DNS standard sollicitant les données d'un enregistrement de ressource TXT pour un nom de domaine pleinement qualifié spécifique, à un serveur DNS autoritaire (102) ou à un serveur DNS non autoritaire (103) ;
II. Si la requête est adressée à un serveur DNS non autoritaire (103), étant un serveur récursif, une procédure de résolution standard pour serveur récursif est utilisée, exploitant l'infrastructure standard du DNS mondial (104) et les échanges standard de requêtes/réponses DNS (107, 108, 109), dans laquelle l'enregistrement TXT reçu destiné à un usage spécifique par l'équilibreur de charge global est traité comme un enregistrement TXT standard, contenant des caractères de chaîne ;
III. Si la requête est adressée à un serveur DNS autoritaire (102), un enregistrement de ressource TXT est généré pour un usage spécifique par l'équilibreur de charge global selon les modalités suivantes :
a. Les octets 1 à 3 contiennent jusqu'à trois caractères désignant l'enregistrement TXT destiné à cet usage spécifique ;
b. Si le serveur correspondant au nom de domaine pleinement qualifié demandé dispose d'une adresse réseau en Internet Protocol version 4 (IPv4), le premier bit de l'octet 4, représentant le bit de poids fort, est positionné à 1 ;
c. Si le serveur correspondant dispose d'une adresse réseau en Internet Protocol version 6 (IPv6), le deuxième bit de l'octet 4 est positionné à 1 ;
d. Sur la base des étapes b) et c), les champs suivants sont remplis en utilisant des données numériques binaires ; en l'absence d'adresse IPv4 ou IPv6, les champs correspondants sont omis ;
e. Pour les noms de domaine pleinement qualifiés disposant de plusieurs serveurs, les procédures a) à d) sont répétées ;
f. Tous les enregistrements TXT créés selon les étapes a) à e) sont envoyés au client DNS (101) ou au serveur DNS récursif (103) sous forme de réponse DNS standard ;
IV. Après réception de la réponse DNS, le client DNS (101) traite chaque champ RDATA de l'enregistrement TXT selon les étapes suivantes :
a. La valeur contenue dans les trois premiers octets est contrôlée pour vérifier qu'elle correspond au nom attendu pour l'enregistrement TXT spécifique ; en cas de non-conformité, l'enregistrement est rejeté ;
b. Les champs d'indicateurs définis dans les octets 4 et 5 sont vérifiés afin de déterminer la structure du reste des données RDATA et d'identifier la présence d'adresses IPv4 et/ou IPv6 ;
c. Les données sont traitées conformément au format RDATA de l'enregistrement TXT, en utilisant les adresses IP et les données spécifiques pour calculer une valeur utilisée dans le processus de sélection dynamique du serveur côté client ; la position de chaque champ est déterminée en analysant la structure RDATA et les valeurs des indicateurs aux octets 4 et 5 ;
d. À partir des informations obtenues à l'étape précédente, le client DNS (101) mesure la distance réseau entre lui-même et le serveur, et calcule une métrique composite DNS en utilisant les informations mesurées et les données relatives à la charge du serveur et/ou au temps de réponse du service réseau.

2. **Procédé** selon la revendication 1, dans lequel les données relatives aux enregistrements A, AAAA et TXT sont combinées dans un unique enregistrement TXT par serveur, contenant à la fois l'adresse IP et les données spécifiques à l'équilibreur de charge global côté client.

3. **Procédé** selon la revendication 1, dans lequel les champs RDATA des enregistrements TXT sont utilisés sous forme binaire, par opposition à la forme classique en caractères de chaîne, afin de réduire la taille des enregistrements TXT.

4. **Procédé** selon la revendication 1, dans lequel la taille variable du champ RDATA est permise par l'introduction d'indicateurs à un bit pour chaque champ optionnel, définissant la présence ou non de ce champ dans l'enregistrement TXT.

5. **Procédé** selon la revendication 1, dans lequel une seule opération de requête/réponse DNS est réalisée pour résoudre l'adresse IP et transférer les données spécifiques de l'équilibreur de charge global côté client, en utilisant uniquement un enregistrement TXT spécifique, au lieu d'utiliser des requêtes/réponses séparées pour les enregistrements A/AAAA et TXT ou d'utiliser une section supplémentaire du message DNS.

6. **Procédé** selon la revendication 1, dans lequel le transfert de données est effectué au moyen du champ RDATA de l'enregistrement TXT spécifique, ayant une taille variable comprise entre 25 et 41 octets, et une structure interne définie comme suit :
• Nom de l'enregistrement : 3 octets ;
• Indicateurs : 2 octets ;
• Adresse IPv4 : 4 octets (champ optionnel) ;
• Adresse IPv6 : 16 octets (champ optionnel) ;
• Impact du temps de réponse serveur : 1 octet ;
• Temps de réponse du service : 2 octets ;
• Impact du temps de réponse du service : 1 octet ;
• Charge du serveur : 2 octets ;
• Impact de la charge du serveur : 1 octet ;
• Nombre de requêtes pour la mesure de la distance réseau : 1 octet ;
• Intervalle de mesure de la distance réseau : 2 octets ;
• Protocole : 2 octets ;
• Port : 2 octets ;
• Délai d'attente (timeout) : 2 octets ; le tout étant utilisé pour transférer une ou plusieurs adresses réseau ainsi que les données spécifiques côté client sous forme d'un unique enregistrement TXT par serveur.

7. **Procédé** selon la revendication 6, dans lequel un client DNS (101) est utilisé, apte à interpréter la structure du champ RDATA spécifique à l'équilibreur de charge global.

8. **Support d'enregistrement lisible par ordinateur** comprenant des instructions qui, lorsqu'elles sont exécutées par un dispositif client, amènent ledit dispositif à mettre en œuvre le procédé selon les revendications 1 à 7, ledit procédé étant utilisé pour transférer l'ensemble des données utilisées par l'équilibreur de charge global côté client, en utilisant uniquement un enregistrement de ressource TXT DNS par serveur, où l'adresse réseau peut être uniquement une adresse IPv4, uniquement une adresse IPv6 ou les deux pour un serveur donné, afin de calculer la métrique composite DNS côté client.
